# EUROPEAN PATENT APPLICATION

(11) **EP 4 728 886 A1**
(43) Date of publication of application: **22.04.2026**
(21) Application number: 24829740.0
(22) Date of filing: 16.01.2024
(51) Int. Cl.: A24C 5/01, A24C 5/00

(54) **MOLD FOR PRODUCING AEROSOL-GENERATING ARTICLE**

(30) Priority: 29.06.2023 CN 202310789936
(71) Applicant: Smoore International Holdings Limited, Grand Cayman, KY1-1111 (KY)
(72) Inventor: DENG, Zhenyong, Shenzhen, Guangdong 518102 (CN); LIANG, Feng, Shenzhen, Guangdong 518102 (CN); JIN, Zutao, Shenzhen, Guangdong 518102 (CN)
(74) Representative: V.O.
(86) International application number: PCT/CN2024/072602
(87) International publication number: WO 2025/001077

(57) **Abstract**

A mold (100) for producing an aerosol-generating article (200), the mold comprising a first main body (10), a second main body (20) and a third main body (30) arranged in sequence in a first direction, wherein an extrusion channel (30a) extending in the first direction is formed in the third main body (30); a first stand column (21) and a feeding channel (20a) is provided on the second main body (20), the feeding channel (20a) extends in the first direction and is in communication with the extrusion channel (30a), and the first stand column (21) extends to the extrusion channel (30a) in the first direction; and a second stand column (11) and a first cavity (10a) is provided on the first main body (10), the first cavity (10a) extends through two opposite ends of the first main body (10) in the first direction and is in communication with the feeding channel (20a), and the second stand column (11) extends to the extrusion channel (30a) in the first direction.

## Description

### CROSS-REFERENCE TO RELATED APPLICATION

This application is based on, and claims priority to Chinese Patent Application No. 202310789936.6, filed on June 29, 2023, the disclosure of which is hereby incorporated by reference in its entirety.

### TECHNICAL FIELD

The present disclosure relates to the technical field of die, and more particularly to a die for manufacturing aerosol generating article.

### BACKGROUND

In the related art, in order to meet the diversified requirements of users, it is required to produce aerosol generating articles with different cross-sectional shapes, and the entire die is needed to be replaced for producing the aerosol generating articles with different cross-sectional shapes, and the production cost for the die is high, such that there is a problem of high production cost.

### SUMMARY

In view of the above, it is desirable to provide a die for producing aerosol generating articles that may reduce the production cost in the embodiments of the present disclosure.

In order to implement the above object, an embodiment of the present disclosure provides a die for producing an aerosol generating article, and the die includes: a first body, a second body, and a third body that are arranged sequentially in a first direction.

The third body is formed with an extrusion passage extending in the first direction.

The second body is provided with a first post and a feed passage, the feed passage extends in the first direction and communicates with the extrusion passage, and the first post extends to the extrusion passage in the first direction.

The first body is provided with a second post and a first cavity, the first cavity extends through two opposite ends of the first body in the first direction and communicates with the feed passage, and the second post extends to the extrusion passage in the first direction.

In some embodiments, the second post is closer to a central axis of the die than the first post.

In some embodiments, on a plane perpendicular to the first direction, an area of cross section of the extrusion passage located upstream in an extrusion direction is not less than an area of cross section of the extrusion passage located downstream in the extrusion direction.

In some embodiments, on a plane perpendicular to the first direction, the maximum value of the area of cross section of the extrusion passage is less than or equal to the minimum value of the area of cross section of the feed passage.

In some embodiments, the second body includes a first connecting segment and a second connecting segment that are arranged sequentially in the first direction, the first connecting segment is arranged close to the first body and forms with a second cavity, the second connecting segment is provided with the feed passage and the first post, and the feed passage communicates with the first cavity through the second cavity.

In some embodiments, there are a plurality of feed passages, the plurality of feed passages extend through two opposite ends of the second connecting segment in the first direction, and the first post is arranged on a side of the second connecting segment facing away from the second cavity.

In some embodiments, there are a plurality of first posts, a via hole is formed in an interior of the second connecting segment, the second post extends to the extrusion passage through the via hole, and the plurality of first posts are annularly arranged on a peripheral side of the second post.

In some embodiments, a portion of an inner wall of the second connecting segment extends radially to form a second connecting rib, and an end of the second connecting rib that is away from the inner wall of the second connecting segment is connected to the first post.

In some embodiments, there are a plurality of first posts and a plurality of second connecting ribs, the plurality of first posts are arranged at intervals and surrounded to form a via hole, the second post extends to the extrusion passage through the via hole, and the plurality of first posts are annularly arranged on a peripheral side of the second post.

In some embodiments, the third body includes a third connecting segment and a fourth connecting segment that are arranged sequentially in the first direction, the third connecting segment is arranged close to the second body and forms with a third cavity, the fourth connecting segment is provided with the extrusion passage, and the feed passage communicates with the extrusion passage through the third cavity.

In some embodiments, when projected on a plane perpendicular to the first direction, a projection of the feed passage is within a projection area of the third cavity.

In some embodiments, an inner side wall of a side of the extrusion passage adjacent to the third cavity forms a guide surface, and a distance between the guide surface and a center of the third body gradually decreases in a direction in which the third cavity enters the extrusion passage.

In some embodiments, a portion of an inner wall of the first cavity extends radially to form a first connecting rib, and an end of the first connecting rib is connected to the second post.

In some embodiments, the end of the extrusion passage away from the second body forms a discharge outlet, and both the second post and the first post extend to the discharge outlet.

In some embodiments, on a plane perpendicular to the first direction, the cross-sectional shape of the extrusion passage is circular, oval, track-shaped, or polygonal.

In some embodiments, on a plane perpendicular to the first direction, the cross-sectional shape of the first post is circular, oval, track-shaped, polygonal, or sector-shaped.

In some embodiments, on a plane perpendicular to the first direction, the cross-sectional shape of the second post is circular, oval, track-shaped, or polygonal.

In some embodiments, a center line of the extrusion passage and/or the second post in an extending direction coincides with a center axis of the die in the first direction.

In some embodiments, at least one of the first body, the second body, or the third body is provided with a positioning post, at least another one of the first body, the second body, or the third body is provided with a positioning hole, and the positioning post cooperates with the positioning hole to position the first body, the second body, and the third body.

In some embodiments, the first direction is an axial direction of the die.

For the die for manufacturing an aerosol generating article according to the embodiments of the present disclosure, the die includes a first body, a second body, and a third body arranged in order in a first direction. That is, the processing convenience for the die is improved by providing the first body, the second body and the third body. The first body is provided with a first cavity, the second body is provided with a feed passage, and the third body is formed with an extrusion passage extending in the first direction. The first cavity at the end away from the second body forms a feed inlet, and the extrusion passage at the end away from the second body forms a discharge outlet. That is, the raw material mixture may be sequentially entered into the first cavity, the feed passage, and the extrusion passage, and extruded through the discharge outlet to form articles or semi-finished articles with various cross sections. Since the first body is provided with a second post, the second body is provided with a first post, and both the second post and the first post extend to the extrusion passage in the first direction, as such, the aerosol generating articles of different cross-sectional shapes or sizes may be obtained by controlling the shapes and gaps of the second post, the first post, and the extrusion passage. That is, the aerosol generating articles of different cross-sectional shapes or sizes may be obtained by replacing one or two of the first body, the second body, or the third body, without replacing the entire die, thereby reducing the production cost. In addition, the porosity of the die may be controlled by controlling the dimensions of the first cavity, the feed passage, and the extrusion passage, which is beneficial to ensure that the pressure rise is formed during extrusion, and facilitates the molding of the aerosol generating article and the tightness of the aerosol generating article.

### BRIEF DESCRIPTION OF THE DRAWINGS

FIG. 1 is a schematic structural diagram of a die according to the first embodiment of the present disclosure.
FIG. 2 is a schematic structural diagram of a die according to the second embodiment of the present disclosure.
FIG. 3 is a schematic structural diagram of a die according to the third embodiment of the present disclosure.
FIG. 4 is a cross-sectional view of FIG. 1.
FIG. 5 is a cross-sectional view of FIG. 2.
FIG. 6 is a cross-sectional view of FIG. 3.
FIG. 7 is a cross-sectional view of the second body in FIG. 4.
FIG. 8 is a cross-sectional view of the second body in FIG. 5.
FIG. 9 is a cross-sectional view of the second body in FIG. 6.
FIG. 10 is a schematic structural diagram of the first body according to the first embodiment of the present disclosure.
FIG. 11 is a schematic structural diagram of the second body according to the second embodiment of the present disclosure.
FIG. 12 is a schematic structural diagram of an aerosol generating article manufactured by a die according to the first embodiment of the present disclosure.
FIG. 13 is a schematic structural diagram of an aerosol generating article manufactured by a die according to the second embodiment of the present disclosure.
FIG. 14 is a schematic structural diagram of an aerosol generating article manufactured by a die according to the third embodiment of the present disclosure.

### DETAILED DESCRIPTION

It is to be noted that without causing any conflict, the embodiments of the present disclosure and the technical features in the embodiments may be combined with each other, and the detailed description in the specific implementations should be understood as an explanation for the purpose of the present disclosure and should not be regarded as an undue limitation on the present disclosure.

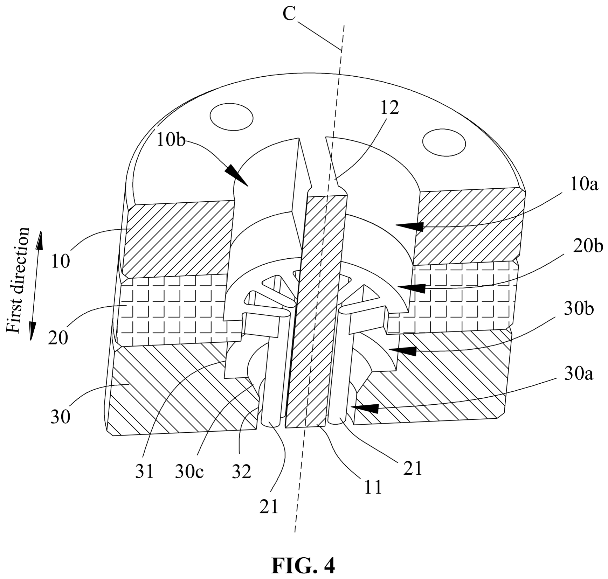

In the description for the embodiments of the present disclosure, it is to be noted that the orientation or positional relationship indicated by the term "first direction" or the like is based on the orientation or positional relationship illustrated in FIG. 4, and it is used merely for the convenience of describing the embodiments of the present disclosure and simplifying the description, and does not indicate or imply that the referred device or element must have a specific orientation, or be constructed and operate in a specific orientation, and thus it is cannot be understood as a limitation for the embodiments of the present disclosure. Furthermore, the terms "first," "second," and "third" are merely for the purpose of description and cannot be understood to indicate or imply relative importance.

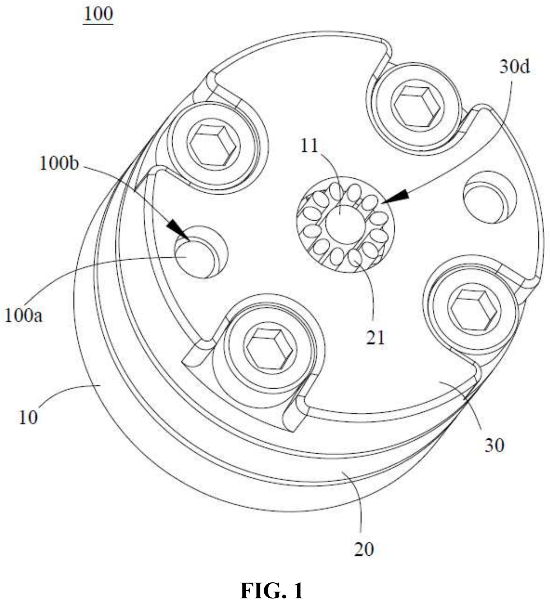

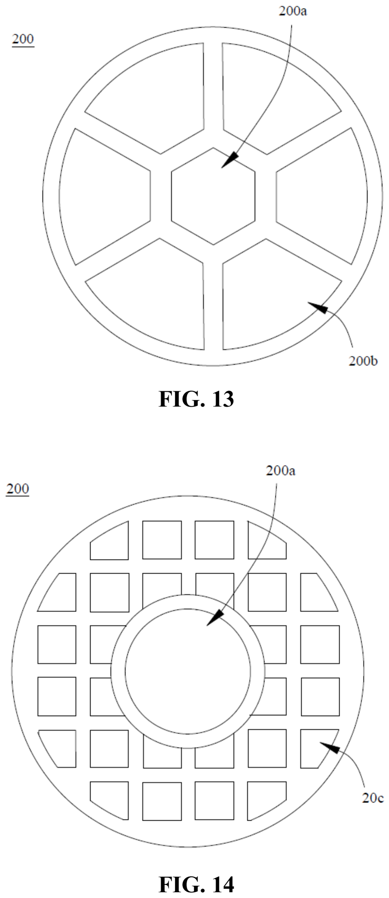

An embodiment of the present disclosure provides a die for manufacturing aerosol generating articles. Referring to FIG. 1 to FIG. 14, the die 100 includes a first body 10, a second body 20, and a third body 30 that are arranged sequentially in a first direction.

The die provided by the embodiment of the present disclosure may be used to manufacture the aerosol generating articles 200 by continuous extrusion process, and the extrusion process may be performed by using the die 100 provided in the embodiment of the present disclosure in combination with any suitable extruder. For example, the extruder may be a hydraulic plunger extruder, a twin screw extruder, a single screw extruder, etc.

The mixture is extruded from the extrusion die 100 device into a honeycomb structure, which is then dried to form all or a portion of the final honeycomb-shaped aerosol generating article 200.

Referring to FIG. 1 to FG. 6, the third body 30 is formed with an extrusion passage 30a extending in the first direction. The end of the extrusion passage 30a away from the second body 20 forms a discharge outlet 30d. That is, the raw material mixture may be extruded through the extrusion passage 30a to produces articles or semi-finished articles of various cross-sections.

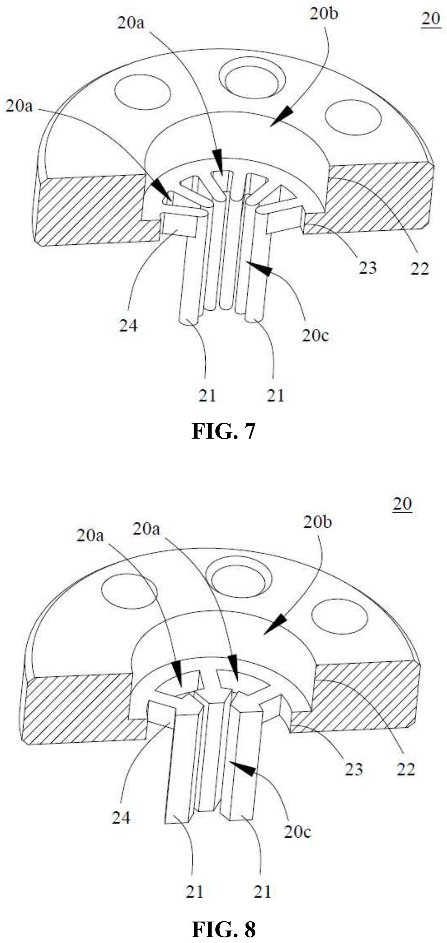

Referring to FIG. 7 to FIG. 11, the second body 20 is provided with a first post 21 and a feed passage 20a. Continuing to refer to FIG. 4 to FIG. 6, the feed passage 20a extends in a first direction and communicates with the extrusion passage 30a, and the first post 21 extends in the first direction to the extrusion passage 30a. That is, the raw material mixture may enter the extrusion passage 30a through the feed passage 20a and be extruded through the discharge outlet 30d to produce the articles or semi-finished articles of various cross sections.

[**0050]** Referring to FIG. 4 to FIG. 6, FIG. 10 and FIG. 11, the first body 10 is provided with a first cavity 10a, the first cavity 10a runs through both opposite ends of the first body 10 along the first direction and communicates with the feed passage 20a, and an end of the first cavity 10a away from the second body 20 is the feed inlet 10b. That is, the raw material mixture may be guided from one end of the first body 10 to the other end of the first body 10 through the first cavity 10a.

[**0051]** The first body 10 is provided with a second post 11, and the second post 11 extends to the extrusion passage 30a in the first direction.

[**0052]** Exemplarily, the center line of the extrusion passage 30a in the extending direction coincides with the center axis C of the die 100 in the first direction.

[**0053]** Referring to FIG. 4, the central axis C of the die 100 in the first direction is a virtual reference line for reference.

[**0054]** The coincidence described herein means that the center line of the extrusion passage 30a in the extending direction substantially coincides or completely coincides with the central axis C of the die 100 in the first direction. That is, there may be a certain deviation between the center line of the extrusion passage 30a in the extending direction and the central axis C of the die 100 in the first direction, and the central axis C of the die 100 in the first direction substantially passes through the center line of the extrusion passage 30a.

[**0055]** Exemplarily, the center line of the second post 11 in the extending direction coincides with the center axis C of the die 100 in the first direction.

[**0056]** The coincidence described herein means that the center line of the second post 11 in the extending direction substantially coincides or completely coincides with the central axis C of the die 100 in the first direction. That is, there may be a certain deviation between the center line of the second post 11 in the extending direction and the central axis C of the die 100 in the first direction, and the central axis C of the die 100 in the first direction substantially passes through the center line of the second post 11.

[**0057]** The second post 11 is closer to the central axis C of the die 100 than the first post 21. For example, the first posts 21 are annularly arranged on a peripheral side of the second post 11. That is, the first posts 21 are circumferentially arranged around the second post 11, and the first posts 21 are arranged at intervals along the peripheral side of the second post 11.

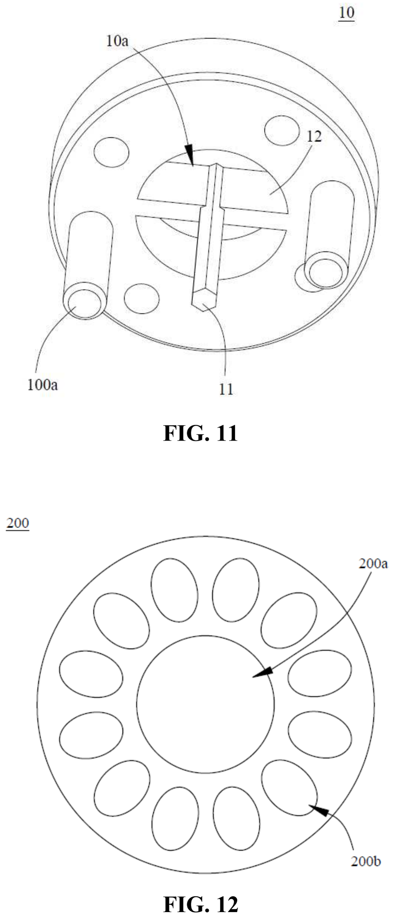

[**0058]** Referring to FIG. 4 to FIG. 6, both the second post 11 and the first post 21 extend to the extrusion passage 30a in the first direction, the first post 21 is annularly arranged on the peripheral side of the second post 11, the inner walls of the second post 11, the first post 21 and the extrusion passage 30a are spaced apart and may be configured to extrude and form the wall thickness or intermediate rib feature of the aerosol generating article 200, the second post 11 may be configured to extrude and form the central hole 200a of the aerosol generating article 200, the first post 21 may be configured to extrude and form the airway holes 200b that are located on the peripheral side of the central hole 200a, the extrusion passage 30a may be configured to extrude the outer peripheral shape for defining the aerosol generating article 200. The raw material mixture is extruded through the extrusion passage 30a, and the extruded material forms a honeycomb-shaped article or semi-finished article (referring to FIG. 12 to FIG. 14).

[**0059]** That is, the shape of the second post 11 may determine the shape of the central hole 200a, the shape of the first post 21 may determine the shape of the airway holes 200b located on the peripheral side of the central hole 200a, and the shape of the extrusion passage 30a may determine the shape of the aerosol generating product 200. In this way, the aerosol generating articles 200 with different cross-sectional shapes may be acquired by combining different first bodies 10, second bodies 20, and third bodies 30.

[**0060]** Exemplarily, the aerosol generating article 200 is a particle aggregate, such as a reconstituted tobacco material containing components like aerosol formers and tobacco, and is an integrated structure molded through continuous extrusion process manner. Extrusion molding refers to a processing method where the raw material mixture is added into an extruder, the material is pushed forward by a screw under the action of an extruder barrel and the screw, and continuously passes through the die according to the embodiments of the present disclosure to form the articles or semi-finished articles with various cross-sections. In addition, the article or semi-finished article extruded by the die 100 may be used to form different components of the aerosol generating article 200, such as a cooling section, a smoking section, a support section, a filter section, etc., or may be used to form directly the entire aerosol generating article 200, which is not limited herein.

[**0061]** When the aerosol generating article 200 is heated for atomization, the aerosol generating article 200 is heated to release aerosol, and the aerosol flows out through the gaps or micropores of the partition wall between the airway holes 200b and the central hole 200a, and is collected into the airway holes 200b and the central hole 200a, and then is transported to the suction end under the action of suction negative pressure.

[**0062]** It is to be noted that the materials for the first body 10, the second body 20, and the third body 30 may or may not be the same. Since the die 100 is configured to manufacture the aerosol generating articles 200, and the extrusion pressure is high during the extrusion process, it is required for the die 100 to have a high strength. In addition, since the raw material mixture of the aerosol generating article 200 contains moisture, the die 100 is required to have a certain ability to resist corrosion or the like. Therefore, the materials of the first body 10, the second body 20, and the third body 30 may all be high-strength stainless steel, such as austenitic stainless steel, martensitic stainless steel, etc.

[**0063]** In the embodiments of the present disclosure, the first direction refers to the feeding direction. For example, when the outline of the die 100 is cylindrical, the first direction is a height direction perpendicular to the bottom surface of the die 100, or the first direction is an axial direction of the die 100. For another example, when the outline of the die 100 is a cuboid, the first direction is still the direction as defined above, i.e., the feeding direction, and the first direction may be any direction of the length, width or height of the cuboid.

[0064] In some other embodiments, when the outline of the die 100 is columnar, the first direction may be inclined relative to the height direction of the bottom surface of the die 100, or the first direction may be inclined relative to the axial direction of the die 100. When the outline of the die 100 is a rectangular, the first direction may be inclined relative to any one direction of the length, width, or height of the rectangular.

[**0065]** In some other embodiments, the first direction refers to the feeding direction, and the first direction may be in a zigzag shape. For example, the die 100 is fed from the side and extrudes from the top surface or the bottom surface. Alternatively, the die 100 is fed from the top surface and extruded from the side.

[**0066]** For the die for manufacturing the aerosol generating articles according to the embodiments of the present disclosure, the die 100 includes a first body 10, a second body 20, and a third body 30 that are sequentially arranged in a first direction. That is, the processing convenience for the die 100 is improved by providing the first body 10, the second body 20 and the third body 30. The first body 10 is provided with a first cavity 10a, the second body 20 is provided with a feed passage 20a, and the third body 30 is formed with an extrusion passage 30a extending in the first direction. An end of the first cavity 10a away from the second body 20 forms a feed inlet 10b, and an end of the extrusion passage 30a away from the second body 20 forms a discharge outlet 30d. That is, the raw material mixture may be sequentially entered into the first cavity 10a, the feed passage 20a, and the extrusion passage 30a, and extruded through the discharge outlet 30d to form the articles or semi-finished articles with various cross sections. Since the first body 10 is provided with the second post 11, the second body 20 is provided with the first post 21, the second post 11 and the first post 21 both extend to the extrusion passage 30a in the first direction, and the first posts 21 are annularly arranged on the peripheral side of the second post 11, the aerosol generating articles 200 of different cross-sectional shapes or dimensions may be obtained by controlling the shapes and gaps of the second post 11, the first post 21, and the extrusion passage 30a. That is, instead of changing the entire die, the aerosol generating articles 200 of different cross-sectional shapes or dimensions may be obtained by replacing one or two of the first body 10, the second body 20, and the third body 30, such that the production cost is reduced. In addition, the porosity of the die 100 may be controlled by controlling the dimensions of the first cavity 10a, the feed passage 20a, and the extrusion passage 30a, which is beneficial to ensure that the pressure rise is formed during the extrusion process, promote the molding of the aerosol generating article 200, and improve the tightness of the aerosol generating article 200.

[**0067]** In the related art, considering the strength problem of the die, the change range the porosity of the feeding end is limited, and it is impossible to ensure that the porosity of the feeding end is always greater than the porosity of the discharge end. That is, the porosity of some areas of the feeding end is less than the porosity of the discharge end, which affects the extrusion effect and stability for the aerosol generating article.

[**0068]** The die provided by the embodiments of the present disclosure includes the first body 10, the second body 20, and the third body 30 which are arranged sequentially in the first direction. For the aerosol generating article 200 having a less porosity, the characteristic size of the die 100 (for example, the sizes of the first cavity 10a, the feed passage 20a and the extrusion passage 30a, or the sizes or gaps of the second post 11 and the first post 21, etc.) may be modified to enable the porosity of the extrusion passage 30a to be less than the porosity of the feed passage 20a, such that the extrusion effect and stability for the aerosol generating article are improved, and the impact on the die 100 is reduced.

[**0069]** On a plane perpendicular to the first direction, the area of cross section of the feeding passage 20a located upstream in the feeding direction is not less than the area of cross section of the feeding passage 20a located downstream in the feeding direction, so that a certain extrusion force may be maintained for the raw material mixture in the feeding passage 20a, or the extrusion force subjected by the raw material mixture is gradually increased, which is beneficial to the feeding of the raw material mixture.

[**0070]** It is to be noted that the flow cross-section refers to a cross-section that is orthogonal to all streamlines of the elementary stream or total flow, i.e. a surface perpendicular to a bundle of streamlines, such as gas or liquid flow. When the bundle of streamlines are not parallel to each other, the flow cross section is a curved surface. When the bundle of streamlines are straight lines parallel to each other, the flow cross section is a plane.

[**0071]** On a plane perpendicular to the first direction, there are many cases in which the area of cross section of the feed passage 20a located upstream in the feed direction is not less than the area of cross section of the feed passage 20a located downstream in the feed direction. For example, in an embodiment, the area of cross section of the feed passage 20a remains the same in the feed direction, that is, each feed passage 20a has an equal diameter. In this way, it is possible to maintain a certain extrusion force for the raw material mixture in the feed passage 20a, which facilitates feeding of the raw material mixture.

[**0072]** In some other embodiments, the area of cross section of each feed passage 20a gradually decreases along the feed direction. That is, each feed passage 20a has a variable diameter, and the area of cross section of the feed passage 20a located upstream in the feed direction is greater than the area of cross section of the feed passage 20a located downstream in the feed direction. In this way, the extrusion force applied to the raw material mixture in the feed passage 20a may be gradually increased, which facilitates the preliminary kneading of the raw material mixture.

[**0073]** In some other embodiments, the flow-through cross-sectional area for part of the feed passages 20a may be the same, and the flow-through cross-sectional area for part of the feed passages 20a may gradually decrease along the feed direction.

[**0074]** On a plane perpendicular to the first direction, the area of cross section of the extrusion passage 30a located upstream in the extrusion direction is not less than the area of cross section of the extrusion passage 30a located downstream in the extrusion direction. As such, a certain extrusion force may be maintained for the raw material mixture in the extrusion passage 30a, or the extrusion force applied to the raw material mixture increases gradually, so that the raw material is gradually compacted and molded.

[**0075]** On a plane perpendicular to the first direction, there are multiple cases in which the area of cross section of the extrusion passage 30a located upstream in the extrusion direction is not less than the area of cross section of the extrusion passage 30a located downstream in the extrusion direction. For example, in an embodiment, the area of cross section of the extrusion passage 30a remains the same in the extrusion direction, that is, each extrusion passage 30a has an equal diameter. In this way, a certain extrusion force may be maintained for the raw material mixture in the extrusion passage 30a, which is beneficial to facilitate complete compaction of the grid structure.

[**0076]** In some other embodiments, the area of cross section of each extrusion passage 30a gradually decreases along the extrusion direction. That is, each extrusion passage 30a has a variable diameter, and the area of cross section of the feed passage 30a located upstream in the extrusion direction is greater than the area of cross section of the feed passage 30a located downstream in the extrusion direction. In this way, the raw material mixture may be further extruded in the extrusion passage 30a, which facilitates complete compaction of the grid structure.

[**0077]** In some other embodiments, the flow-through cross-sectional areas for part of the extrusion passages 30a may be the same, and the flow-through cross-sectional areas for part of the extrusion passages 30a may gradually decrease along the extrusion direction.

[**0078]** Exemplarily, on a plane perpendicular to the first direction, the maximum value of the area of cross section of the extrusion passage 30a is less than or equal to the minimum value of the area of cross section of the feed passage 20a, such that a certain extrusion force may be maintained for the raw material mixture in the extrusion passage 30a, or the extrusion force applied to the raw material mixture increases gradually. When the maximum value of the area of cross section of the extrusion passage 30a is less than the minimum value of the area of cross section of the feed passage 20a, it is used for further extruding the raw material mixture in the extrusion passage 30a after the raw material mixture enters the extrusion passage 30a through the feed passage 20a, such that it is beneficial to promote complete compaction for the grid structure, and control the density of the aerosol generating article 200 in a case where the porosity of the aerosol generating article 200 is fixed.

[**0079]** For example, referring to FIG. 4 to FIG. 9, the second body 20 includes a first connecting segment 22 and a second connecting segment 23 that are arranged sequentially in the first direction. The first connecting segment 22 is arranged close to the first body 10 and forms with a second cavity 20b, the second connecting segment 23 is provided with a feed passage 20a and a first post 21, and the feed passage 20a communicates with the first cavity 10a through the second cavity 20b. In this way, the raw material mixture may first enter the second cavity 20b from the first cavity 10a, and then enter the feed passage 20a through the second cavity 20b. In a case where the dimension of the first post 21 along the first direction is constant, the length of the feed passage 20a may be shortened, such that the resistance subjected by the raw material mixture in the feeding process is reduced, which is beneficial to the feeding of the raw material mixture.

[**0080]** Of course, the second body 20 may also be provided without the first connecting segment 22. That is, the second cavity 20b is not provided, and the raw material mixture enters directly from the first cavity 10a into the feed passage 20a.

[**0081]** There are a plurality of feeding passages 20a, and the raw material mixture may be subjected to a certain extrusion force in the extrusion passage 30a while ensuring the uniformity of feeding by providing the plurality of feeding passages 20a.

[**0082]** It is to be noted that the number of the first post 21 is not limited herein. For example, the number of the first post 21 may be one, or there may be a plurality of first posts 21.

[**0083]** It is to be noted that in the embodiment of the present disclosure, "a plurality of" indicates two or more.

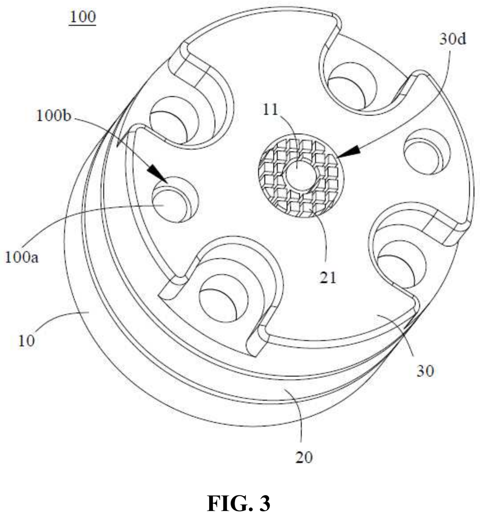

[**0084]** Exemplarily, referring to FIG. 3, FIG. 6, FIG. 9 and FIG. 14, each feed passage 20a extends through two opposite ends of the second connecting segment 23 in the first direction, and the first post 21 is arranged on the side of the second connecting segment 23 away from the second cavity 20b. That is, the raw material mixture may be guided from one end of the second connecting segment 23 to the other end of the second connecting segment 23 through the feed passage 20a. The first post 21 is arranged on the side of the second connecting segment 23 away from the second cavity 20b, and the first post 21 extends to the extrusion passage 30a. That is, the raw material mixture may enter the extrusion passage 30a through the feed passage 20a, be filled in the gaps of the first posts 21 or between the first posts 21 and the inner wall of the extrusion passage 30a, and then be extruded by the discharge outlet 30d to form the articles or semi-articles of various cross-sections.

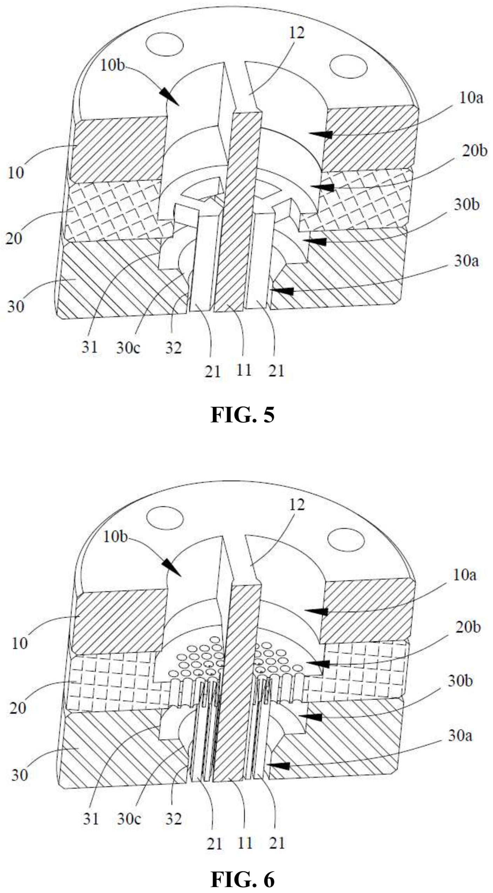

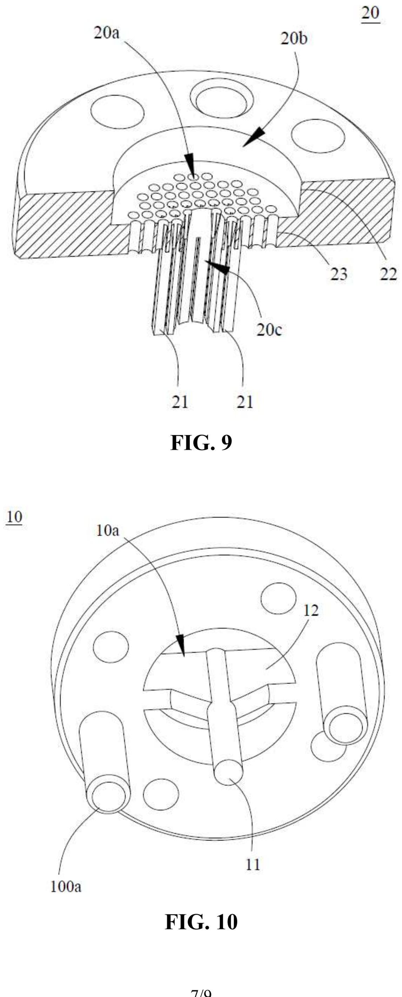

[**0085]** For example, referring to FIG. 6 and FIG. 9, the inside of the second connecting segment 23 forms a via hole 20c, the second post 11 extends to the extrusion passage 30a through the via hole 20c, and the first posts 21 are annularly arranged on the peripheral side of the second post 11. It is facilitated for the second post 11 to extend to the extrusion passage 30a through the via hole 20c by providing the via hole 20c, and the first posts 21 are arranged on the peripheral side of the via hole 20c, and the first posts 21 are arranged, for example, in a circumferential direction around the center of the second post 11, so that the first posts 21 are annularly arranged on the peripheral side of the second post 11.

[**0086]** For example, referring to FIG. 4 to FIG. 8, a portion of the inner wall of the second connecting segment 23 extends in the radial direction to form a second connecting rib 24, and the end of the second connecting rib 24 away from the inner wall of the second connecting segment 23 is connected to the first post 21.

[**0087]** That is, the second connecting rib 24 is provided for connecting the first post 21, and the second connecting rib 24 extends in the radial direction of the second connecting section 23, it is facilitated for the first post 21 to extend in the first direction.

[**0088]** It is to be noted that the number of the second connecting ribs 24 is not limited herein. For example, the number of the second connecting ribs 24 may be one, or there may be a plurality of second connecting ribs 24.

[**0089]** For example, continued to refer to FIG. 4 to FIG. 8, there are a plurality of first posts 21 and a plurality of second connecting ribs 24, and the first posts 21 correspond to the second connecting ribs 24 one-to-one. The plurality of first posts 21 are spaced apart and arranged to surround and form a via hole 20c, the second post 11 extends to the extrusion passage 30a through the via hole 20c, and the first posts 21 are annularly arranged on the peripheral side of the second post 11.

[**0090]** Referring to FIG. 4 to FIG. 8, the gap between the inner wall of the second connecting section 23, the second connecting rib 24 and the first posts 21 forms the feed passage 20a, and the raw material mixture may enter the extrusion passage 30a through the gap between the gap between the inner wall of the second connecting section 23, the second connecting rib 24 and the first posts 21.

[**0091]** For example, referring to FIG. 4 to FIG. 6, the third body 30 includes a third connecting segment 31 and a fourth connecting segment 32 that are arranged sequentially in the first direction. The third connecting segment 31 is arranged close to the second body 20 and forms with a third cavity 30b, the fourth connecting segment 32 is provided with am extrusion passage 30a, and the feed passage 20a communicates with the extrusion passage 30a through the third cavity 30b. In this way, the raw material mixture may enter the third cavity 30b from the feeding passage 20a first, and then enter the extrusion passage 30a through the third cavity 30b. The arrangement of the third cavity 30b enables the raw material mixture entering the third body 30 from the feeding passage 20a to be temporarily stored in the third cavity 30b. When the third cavity 30b is filled, a certain extrusion force is formed, and it is extruded from the discharge outlet 30d. The arrangement of the third cavity 30b facilitates the raw material mixture to enter the extrusion passage 30a from the feed passage 20a.

[**0092]** Generally, after the cross-sectional shape of the aerosol generating article 200 is determined, that is, the porosity of the discharge outlet 30d of the die 100 is determined, at this case, the dimension of the third cavity 30b may be changed to enable the porosity of the third cavity 30b to be greater than the porosity of the discharge outlet 30d, such that the compactness for the aerosol generating article 200 is ensured.

[**0093]** Similarly, the porosity of the second cavity 20b and the porosity of the first cavity 10a may be changed by changing the dimension of the second cavity 20b and the dimension of the first cavity 10a. That is, the porosity of the second cavity 20b and the porosity of the first cavity 10a may be controlled by changing the dimension of the second cavity 20b and the dimension of the first cavity 10a, such that the reliability and accuracy for the die 100 may be improved.

[**0094]** Of course, the third body 30 may also be provided without the third connecting segment 31. That is, the third cavity 20b is not provided, and the raw material mixture enters directly from the feed passage 20a into the extrusion passage 30a.

[**0095]** Exemplarily, when projected on a plane perpendicular to the first direction, the projection of the feed passage 20a is within the projection area of the third cavity 30b, that is, the feed passage 20a is not obstructed by the third body 30. In other words, the arrangement of the third cavity 30b may prevent the third body 30 from obstructing the feeding passage 20a to a certain extent. That is, by providing the third cavity 30b, the raw material mixture may smoothly enter the third cavity 30b of the third body 30 from the feeding passage 20a, and then enter the extrusion passage 30a from the third cavity 30b, which is beneficial for the extrusion of the raw material mixture.

[**0096]** For example, referring to FIG. 4 to FIG. 6, the inner side wall of the side of the extrusion passage 30a close to the third cavity 30b forms a guide surface 30c, and the distance between the guide surface 30c and the center of the third body 30 gradually decreases in the direction in which the third cavity 30b enters the extrusion passage 30a. That is, the distance between the guide surface 30c and the center of the third body 30 gradually decreases in the extrusion direction. It is facilitated for the raw material mixture in the third cavity 30b to be guided to the extrusion passage 30a through the guide surface 30c by forming the guide surface 30c at the connection of the third cavity 30b and the extrusion passage 30a, thereby facilitating the extrusion of the raw material mixture.

[0097] For example, referring to FIG. 4 to FIG. 6, FIG. 10 and FIG. 11, a portion of the inner wall of the first cavity 10a extends in the radial direction to form a first connecting rib 12, and the first connecting rib 12 is connected to the second post 11.

[**0098]** That is, the first connecting rib 12 is provided for connecting the second post 11, and the first connecting rib 12 extends in the radial direction of the first connecting section 22, it is facilitated for the second post 11 to extend in the first direction.

[**0099]** Specifically, the first connecting rib 12 extends in the radial direction of the first connecting section 22, and extends to the inner wall of the opposite side of the first cavity 10a after passing through the center line of the first cavity 10a, and the second post 11 is arranged at the center line of the first connecting rib 12.

[**00100]** It is to be noted that the dimension of the first connection rib 12 in the first direction of the first body 10 is not limited herein. Exemplarily, the first connecting rib 12 extends along an end of the first main body 10 in the first direction to the other end of the first body 10 in the first direction, such that the strength of the first connecting rib 12 may be guaranteed.

[**00101]** For example, referring to FIG. 1 to FIG. 3, the end of the extrusion passage 30a away from the second body 20 forms a discharge outlet 30d, and both the second post 11 and the first post 21 extend to the discharge outlet 30d. Both the second post 11 and the first post 21 are arranged to extend to the discharge outlet 30d, that is, both the second post 11 and the first post 21 extend to the end of the extrusion passage 30a away from the second body 20, such that the ends of the second post 11 and the first post 21 may be flush with the discharge outlet 30d or beyond the discharge outlet 30d, thereby facilitating extrusion of the raw material mixture to form the articles or semi-finished articles of various cross-sections.

[**00102]** Of course, in other embodiments, the second post 11 and/or the first post 21 may also not extend to the discharge outlet 30d, that is, the end of the second post 11 and/or the end of the first post 21 is located between the discharge outlet 30d and the feed passage 20a, as long as the raw material mixture may be extruded to form the articles or semi-finished articles of various cross-sections.

[**00103]** It is to be noted that the shape of the extrusion passage 30a is not limited herein. For example, on a plane perpendicular to the first direction, the cross-sectional shape of the extrusion passage 30a is circular (referring to FIG. 1 to FIG. 3), oval, track-shaped or polygonal.

[**00104]** The extrusion passage 30a may be configured to extrude the peripheral shape for defining the aerosol generating article 200. That is, the cross-sectional shape of the aerosol generating article 200 is circular, oval, track-shaped, or polygonal.

[**00105]** The cross-sectional shape of the extrusion passage 30a refers to the cross-sectional shape of the extrusion passage 30a taken in a plane perpendicular to the first direction.

[**00106]** The track shape refers to the shape similar to the athletics track, which is formed by alternately connecting two semicircles and two parallel straight sides.

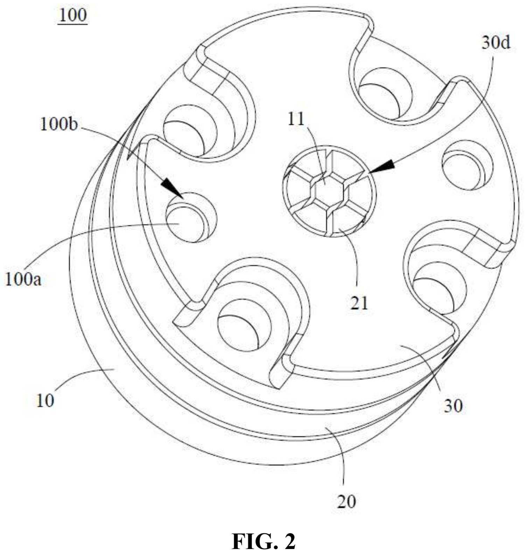

[**00107]** It is to be noted that the shape of the first post 21 is not limited herein. For example, on a plane perpendicular to the first direction, the cross-sectional shape of the first post 21 is circular, oval (referring to FIG. 1), track-shaped, polygonal (referring to FIG. 3), or sector-shaped (referring to FIG. 2).

[**00108]** The cross-sectional shape of the first post 21 refers to the cross-sectional shape of the first post 21 taken in a plane perpendicular to the first direction.

[**00109]** The first post 21 may be configured to extrude and form the airway holes 200b located on the peripheral side of the central hole 200a. That is, the cross-sectional shape of the airway hole 200b formed by extruding by the first post 21 is circular, oval, track-shaped, polygonal, or sector-shaped.

[**00110]** Exemplarily, there are plurality of airway holes 200b, and the shapes and dimensions of the airway holes 200b are the same. For example, all airway holes 200b are in the form of equilateral triangle, and all equilateral triangles have an equal side length. For another example, all airway holes 200b are in the form of circle with the same radius. In this way, the airway holes 200b of the aerosol generating article 200 may be formed based on the same molding die 100, thereby reducing the production cost.

[**00111]** It is to be noted that the shape of the second post 11 is not limited herein. For example, on a plane perpendicular to the first direction, the cross-sectional shape of the second post 11 is a circle (referring to FIG. 1 and FIG. 3), an oval, a track shape, or a polygon (referring to FIG. 2).

[**00112]** The cross-sectional shape of the second post 11 refers to the cross-sectional shape of the second post 11 taken in a plane perpendicular to the first direction.

[**00113]** The second post 11 may be configured to extrude to form the central hole 200a of the aerosol generating article 200. That is, the cross-sectional shape of the central hole 200a formed by extruding by the second post 11 is a circle, an oval, a track shape, a polygon, or a sector.

[**00114]** Referring to FIG. 1 to FIG. 3, the first body 10, the second body 20, and the third body 30 are positioned by a positioning post 100a and a positioning hole 100b. For example, at least one of the first body 10, the second body 20, or the third body 30 is provided with a positioning post 100a, and at least another one of the first body 10, the second body 20, or the third body 30 is provided with a positioning hole 100b, and the positioning post 100a cooperates with the positioning hole 100b to position the first body 10, the second body 20, and the third body 30.

[**00115]** That is, one of the first body 10, the second body 20, or the third body 30 may be provided with the positioning post 100a, and the other two may be provided with the positioning holes 100b. Alternatively, one of the first body 10, the second body 20, or the third body 30 may be provided with a positioning hole 100b, and the other two may be provided with the positioning posts 100a. Of course, alternatively, one or more of them may be provided with both the positioning post 100a and the positioning hole 100b.

[**00116]** Exemplarily, in some embodiments, the first body 10 is provided with a positioning post 100a, both the second body 20 and the third body 30 are provided with a positioning hole 100b corresponding to the positioning post 100a, and the first body 10, the second body 20, and the third body 30 may be positioned by inserting the positioning post 100a of the first body 10 into the positioning holes 100b of the second body 20 and the third body 30.

[**00117]** In some other embodiments, the third body 30 is provided with a positioning post 100a, both the second body 20 and the first body 10 are provided with a positioning hole 100b corresponding to the positioning post 100a, and the first body 10, the second body 20, and the third body 30 may be positioned by inserting the positioning post 100a of the third body 30 into the positioning holes 100b of the second body 20 and the first body 10.

[**00118]** In some other embodiment, the second body 20 is provided with a positioning post 100a, both the third body 30 and the first body 10 are provided with a positioning hole 100b corresponding to the positioning post 100a, and the first body 10, the second body 20, and the third body 30 may be positioned by inserting the positioning post 100a of the second body 20 into the positioning holes100b of the third body 30 and the first body 10.

[**00119]** For example, the first body 10, the second body 20, and the third body 30 are fastened by a bolt, and the connection manner is simple and reliable.

[**00120]** Several specific embodiments are provided below.

### [00121] First embodiment

[**00122]** Referring to FIG. 1, FIG. 4, FIG. 7 and FIG. 12, the cross-sectional shape of the extrusion passage 30a of the die 100 is circular, the cross-sectional shape of the second post 11 is circular, and the cross-sectional shape of the first post 21 is oval. The cross-sectional shape of the aerosol generating article 200 is circular, the central hole 200a is circular, and the airway hole 200b is oval.

### [00123] Second embodiment

[**00124]** Referring to FIG. 2, FIG. 5, FIG. 8, and FIG. 13, the cross-sectional shape of the extrusion passage 30a of the die 100 is circular, the cross-sectional shape of the second post 11 is hexagonal, and the cross-sectional shape of the first post 21 is sector-shaped. The cross-sectional shape of the aerosol generating article 200 is circular, the central hole 200a is hexagonal, and the airway hole 200b is fan-shaped.

### [00125] Third embodiment

[**00126]** Referring to FIG. 3, FIG. 6, FIG. 9 and FIG. 14, the cross-sectional shape of the extrusion passage 30a of the die 100 is circular, the cross-sectional shape of the second post 11 is circular, and the cross-sectional shape of the first post 21 is quadrilateral or a portion of quadrilateral. The cross-sectional shape of the aerosol generating article 200 is circular, the central hole 200a is circular, and the airway hole 200b is quadrilateral or a portion of quadrilateral.

[**00127]** In the description of the present disclosure, the description for the reference expressions "in an embodiment", "in some embodiments", "in some other embodiments", "in yet some other embodiments", "for example", or the like means that specific features, structures, materials, or characteristics described in connection with the embodiment or example are included in at least one embodiment or example of the present disclosure. In the present disclosure, the illustrative description for the above expressions do not necessarily refer to the same embodiment or example. Further, the described specific features, structures, materials or characteristics may be combined with each other in any one or more embodiments or examples in a suitable manner. Further, those skilled in the art may combine different embodiments or examples described in the present disclosure and features of different embodiments or examples without contradicting.

[**00128]** The above descriptions are merely preferred embodiments of the present disclosure, and are not intended to limit the present disclosure, and various modifications and variations may be made by those skilled in the art. Any modifications, substitutions and improvements made within the spirit and principles of the present disclosure all fall within the protection scope of the present disclosure.

## Claims

1. A die for producing an aerosol generating article, comprising: a first body, a second body, and a third body that are arranged sequentially in a first direction;
wherein the third body is formed with an extrusion passage extending in the first direction;
the second body is provided with a first post and a feed passage, the feed passage extends in the first direction and communicates with the extrusion passage, and the first post extends to the extrusion passage in the first direction;
the first body is provided with a second post and a first cavity, the first cavity extends through two opposite ends of the first body in the first direction and communicates with the feed passage, and the second post extends to the extrusion passage in the first direction.

2. The die of claim 1, wherein on a plane perpendicular to the first direction, an area of cross section of the extrusion passage located upstream in an extrusion direction is not less than an area of cross section of the extrusion passage located downstream in the extrusion direction; and/or
wherein the second post is closer to a central axis of the die than the first post.

3. The die of claim 1, wherein the second body comprises a first connecting segment and a second connecting segment that are arranged sequentially in the first direction, the first connecting segment is arranged close to the first body and forms with a second cavity, the second connecting segment is provided with the feed passage and the first post, and the feed passage communicates with the first cavity through the second cavity.

4. The die of claim 3, wherein there are a plurality of feed passages, the plurality of feed passages extend through two opposite ends of the second connecting segment in the first direction, and the first post is arranged on a side of the second connecting segment facing away from the second cavity.

5. The die of claim 4, wherein there are a plurality of first posts, a via hole is formed in an interior of the second connecting segment, the second post extends to the extrusion passage through the via hole, and the plurality of first posts are annularly arranged on a peripheral side of the second post.

6. The die of claim 3, wherein a portion of an inner wall of the second connecting segment extends radially to form a second connecting rib, and an end of the second connecting rib that is away from the inner wall of the second connecting segment is connected to the first post.

7. The die of claim 6, wherein there are a plurality of first posts and a plurality of second connecting ribs, the plurality of first posts are arranged at intervals and surrounded to form a via hole, the second post extends to the extrusion passage through the via hole, and the plurality of first posts are annularly arranged on a peripheral side of the second post.

8. The die of claim 1, wherein the third body comprises a third connecting segment and a fourth connecting segment that are arranged sequentially in the first direction, the third connecting segment is arranged close to the second body and forms with a third cavity, the fourth connecting segment is provided with the extrusion passage, and the feed passage communicates with the extrusion passage through the third cavity.

9. The die of claim 8, wherein when projected on a plane perpendicular to the first direction, a projection of the feed passage is within a projection area of the third cavity.

10. The die of claim 8, wherein an inner side wall of a side of the extrusion passage adjacent to the third cavity forms a guide surface, and a distance between the guide surface and a center of the third body gradually decreases in a direction in which the third cavity enters the extrusion passage.

11. The die of claim 1, wherein a portion of an inner wall of the first cavity extends radially to form a first connecting rib, and the first connecting rib is connected to the second post; and/or wherein an end of the extrusion passage away from the second body forms a discharge outlet, and both the second post and the first post extend to the discharge outlet.

12. The die of claim 1, wherein on a plane perpendicular to the first direction, a cross-sectional shape of the extrusion passage is circular, oval, track-shaped or polygonal; and/or wherein on the plane perpendicular to the first direction, a maximum value of an area of cross section of the extrusion passage is less than or equal to a minimum value of an area of cross section of the feed passage.

13. The die of claim 1, wherein on a plane perpendicular to the first direction, a cross-sectional shape of the first post is circular, oval, track-shaped, polygonal or sector-shaped; and/or wherein on the plane perpendicular to the first direction, the cross-sectional shape of the second post is circular, oval, track-shaped or polygonal.

14. The die of claim 1, wherein a center line of the extrusion passage and/or the second post in an extending direction coincides with a center axis of the die in the first direction.

15. The die of claim 1, wherein at least one of the first body, the second body, or the third body is provided with a positioning post, at least another one of the first body, the second body, or the third body is provided with a positioning hole, and the positioning post cooperates with the positioning hole to position the first body, the second body, and the third body.

16. The die of any one of claims 1 to 15, wherein the first direction is an axial direction of the die.
